# EUROPÄISCHE PATENTSCHRIFT

(11) **EP 1 194 883 B1**
(45) Veröffentlichungstag und Bekanntmachung des Hinweises auf die Patenterteilung: **02.01.2003**
(21) Anmeldenummer: 00940405.4
(22) Anmeldetag: 26.06.2000
(51) Int. Cl.: G06K 11/08, G06K 11/18

(54) **VORRICHTUNG UND VERFAHREN ZUR EINGABE VON STEUERINFORMATIONEN IN COMPUTERSYSTEME**
METHOD AND DEVICE FOR INPUTTING CONTROL INFORMATION IN COMPUTER SYSTEMS
DISPOSITIF ET PROCEDE D'ENTREE D'INFORMATIONS DE COMMANDE DANS DES SYSTEMES INFORMATIQUES

(30) Priorität: 25.06.1999 EP 99112287
(43) Veröffentlichungstag der Anmeldung: 10.04.2002
(73) Patentinhaber: SIEMENS AKTIENGESELLSCHAFT, 80333 München (DE)
(72) Erfinder: BOCK, Gerhard, D-82152 Krailling (DE); KOCOUREK, Christine, D-81549 München (DE); SEYTTER, Fritz, D-81667 München (DE)
(86) Internationale Anmeldenummer: EP0005917
(87) Internationale Veröffentlichungsnummer: WO01001334

(56) Entgegenhaltungen:
- EP-A- 0 773 494
- EP-A- 0 825 514
- WO-A-98/58346
- PATENT ABSTRACTS OF JAPAN vol. 1998, no. 14, 31. Dezember 1998 (1998-12-31) & JP 10 240436 A (NIKON CORP), 11. September 1998 (1998-09-11) & JP 10 240436 A (NIKON CORP) 11. September 1998 (1998-09-11)
- PATENT ABSTRACTS OF JAPAN vol. 016, no. 451 (P-1424), 18. September 1992 (1992-09-18) & JP 04 158434 A (TOSHIBA CORP), 1. Juni 1992 (1992-06-01)
- "VIRTUAL MOUSE" IBM TECHNICAL DISCLOSURE BULLETIN,US,IBM CORP. NEW YORK, Bd. 34, Nr. 12, Seite 213-214 XP000308493 ISSN: 0018-8689
- PATENT ABSTRACTS OF JAPAN vol. 1999, no. 04, 30. April 1999 (1999-04-30) & JP 11 002868 A (NIKON CORP), 6. Januar 1999 (1999-01-06)
- PATENT ABSTRACTS OF JAPAN vol. 018, no. 197 (P-1723), 6. April 1994 (1994-04-06) & JP 06 004208 A (SHARP CORP), 14. Januar 1994 (1994-01-14) & JP 06 004208 A (SHARP) 14. Januar 1994 (1994-01-14)

## Beschreibung

Die Erfindung bezieht sich auf eine Vorrichtung und ein Verfahren zum Eingeben von Steuerinformationen in Computersysteme und insbesondere auf eine Eingabevorrichtung und ein dazugehöriges Verfahren zur Bedienung eines mobilen Multimedia-Kommunikationsendgeräts (mobiles Bildtelefon).

Mobile Kommunikationsendgeräte wie z.B. Handys erhalten zunehmend Zugang zu sogenannten "online-Diensten". Insbesondere durch die Einführung des breitbandigen zukünftigen Mobilfunknetzes UMTS wird qualitativ hochwertig Internet-Zugang mobil möglich.

In gleicher Weise gewinnen sogenannte Kleinst-Computersysteme (wie z.B. Palm-Geräte) zunehmend an Bedeutung, in denen verschiedenste Organisations-Funktionen (wie z.B. Adreßverwaltung, Tagesplaner, Aufgabenliste, ...) implementiert sind.

Zur Bedienung dieser anzeigegesteuerten Computersysteme benötigt man eine Eingabevorrichtung, mit der die an einer Anzeigeeinheit dargestellten Informationen gesteuert bzw. ausgewählt werden können.

Üblicherweise besitzen derartige mobile Kleinst-Coniputersysteme sogenannte "touch-screens" als Eingabevorrichtung, wobei die Anzeigeeinheit mit einer berührungsempfindlichen Schicht ausgestattet ist, und über einen zusätzlichen Eingabestift eine entsprechende Eingabe von Steuerinformationen bzw. eine Auswahl der angezeigten Informationen ermöglicht wird. Nachteilig ist bei derartigen herkömmlichen Eingabevorrichtungen jedoch, daß der zusätzliche Eingabestift im Gerät untergebracht werden muß und somit verlorengehen kann. Ferner ist eine Oberfläche dieser herkömmlichen "touch-screen"-Anzeigeeinheiten mechanisch nicht sehr robust.

Ferner sind sogenannte herkömmliche "Maus"-Eingabevorrichtungen bekannt, wobei ein rollender Ball in ein entsprechendes elektrisches Signal umgewandelt wird, das als Zeiger symbol bzw. Auswahlinformation an einer Anzeigeeinheit dargestellt wird. Darüberhinaus können Steuertasten als Eingabevorrichtung für Computersysteme verwendet werden.

Insbesondere bei Kleinst-Computersystemen sind jedoch derartige Eingabevorrichtungen aufgrund ihres erhöhten Platzbedarfs nicht möglich.

Alternativ zu den vorstehend beschriebenen berührungsgesteuerten Eingabevorrichtungen sind sogenannte berührungslose Eingabevorrichtungen bekannt, bei denen beispielsweise eine Videokamera eine Position eines Eingabestiftes erfaßt , auswertet und auf der Grundlage der Auswertung anschließend ein in der Anzeigeeinheit dargestelltes Zeiger symbol bzw. eine Auswahlinformation verschoben wird (z.B. US 5,726,685). Ferner ist aus der Druckschrift US 5,617,312 eine sogenannte Gesten-Eingabevorrichtung bekannt, bei der Gesten einer Person von einer Kamera aufgenommen werden und anschließend in entsprechende Steuersignale zur Steuerung eines in der Anzeigeeinheit dargestellten Zeigersymbols bzw. Auswahlinformation umgewandelt werden. Da diese Eingabevorrichtungen auf einer relativ komplexen Mustererkennung beruhen, sind sie jedoch zumeist fehleranfällig und benötigen eine hohe Rechenleistung.

Aus der den Oberbegriff des Patentanspruchs 1 bildenden Druckschrift EP-A-773 494 ist eine Eingabevorrichtung für Computersysteme mit einer Aufnahmeeinheit zum seriellen Aufnehmen von Bildinformationen; einer Bildauswerteeinheit zum Auswerten der aufgenommenen Bildinformationen und Ermitteln von Steuerinformationen; einer Datenverarbeitungseinheit zum Verarbeiten der Steuerinformationen in Auswahlinformationen; und einer Anzeigeeinheit zum Anzeigen der Auswahlinformationen bekannt. Die Bildauswerteeinheit ermittelt hierbei die Steuerinformationen aus einer relativen Verschiebung der seriell aufgenommenen Bildinformationen.

Ferner ist aus der Druckschrift JP 10 240 436 A eine Vorrichtung und ein Verfahren zum Ansteuern einer Anzeige bekannt, bei der in Abhängigkeit von einer relativen Bewegung bzw. Verschiebung einer CCD-Kamera ein auf der Anzeige dargestelltes Bild oder Menu entsprechend vertikal oder horizontal verschoben wird.

Demgegenüber liegt der Erfindung die Aufgabe zugrunde, eine Eingabevorrichtung und ein dazugehöriges Verfahren für Computersysteme zu schaffen, welches platzsparend, kostengünstig und zuverlässig ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 17 gelöst.

Insbesondere durch die Verwendung einer Bildauswerteeinheit, die eine Bildkompressionseinrichtung zum Erzeugen von Bewegungsvektoren verwendet, wobei die Steuerinformationen aus einem Haupt-Bewegungsvektor abgeleitet sind, können insbesondere bei mobilen Bildtelefonen die bereits vorhandene Aufnahmeeinheit sowie das dazugehörige Bildkompressionsverfahren gleichzeitig als Eingabevorrichtung verwendet werden.

Vorzugsweise werden zum Erzeugen von x- und y-Komponenten der Steuerinformationen jeweilige parallele Verschiebungskomponenten der Bildinformationen in x- und y-Richtung verwendet, wodurch sich eine Steuerung eines Zeigersymbols bzw. einer Auswahlinformation in einer zweidimensionalen Anzeige realisieren läßt. Die Steuerinformationen können jedoch auch eine z-Komponente aufweisen, die sich aus einer konzentrischen Verschiebung der Bildinformationen in x- und y-Richtung ergibt, wodurch sich eine Steuerung eines Zeigersymbols bzw. einer Auswahlinformation in einer dreidimensionalen oder quasi-dreidimensionalen Anzeige realisieren läßt. Darüberhinaus läßt sich dadurch eine intuitive Vergrößerung bzw. Verkleinerung des Abbildungsmaßstabes erzeugen. Zum Erzeugen einer derartigen konzentrischen Verschiebung von Bildinformationen für eine dreidimensionale Eingabe kann die Aufnahmeeinheit vorzugsweise eine Zoom-Funktionseinheit aufweisen.

Als Computersystem wird insbesondere ein mobiles Multimedia-Kommunikationsendgerät verwendet, wobei in einem mobilen Bildtelefon die Aufnahmeeinheit sowohl zum Aufnehmen eines Gesprächspartners als auch als Eingabevorrichtung verwendet wird. In gleicher Weise wird eine Anzeigeeinheit sowohl zum Anzeigen eines Gesprächspartners als auch zum Anzeigen einer Internet-Seite, Organisations-Seite, usw. verwendet. Somit erhält man eine äußerst kostengünstige und platzsparende Realisierung der Eingabevorrichtung. Die Aufnahmeeinheit besteht hierbei insbesondere aus einer CCD- oder CMOS-Sensorkamera, wodurch sich der Platzbedarf weiter verringert.

Vorzugsweise nimmt die Aufnahmeeinheit in Anzeigerichtung der Anzeigeeinheit Bildinformationen zur Eingabesteuerung auf, sie kann jedoch auch Bildinformationen in entgegengesetzter Richtung aufnehmen. Dies wirkt sich insbesondere dann vorteilhaft aus, wenn die Eingabevorrichtung in einem mobilen Bildtelefon ausgebildet ist, da bei Auflegen des Bildtelefons auf eine geeignete Unterlage durch entsprechendes Hin- und Herbewegen des Bildtelefons ein dazugehöriges Zeigersymbol in der Anzeigeeinheit wie bei einer herkömmlichen Maus-Eingabevorrichtung verschoben werden kann.

Vorzugsweise besitzt die Aufnahmeeinheit ein Makro-Kamerasystem zum Aufnehmen von Bildinformationen aus sehr kurzer Entfernung, wodurch beispielsweise eine Eingabe durch Auflegen eines Fingers unmittelbar auf die Aufnahmeeinheit erfolgen kann. Besitzt die Aufnahmeeinheit darüber hinaus einen Druck-Sensor zum Bestätigen einer angezeigten Auswahlinformation, so läßt sich die Eingabevorrichtung wie eine herkömmliche "touch-screen"-Eingabevorrichtung bedienen.

In den Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine schematische Darstellung der erfindungsgemäßen Eingabevorrichtung;
Figur 2 eine schematische Darstellung von seriell aufgenommenen Bildinformationen zur Veranschaulichung einer dreidimensionalen Steuerung;
Figur 3a und 3b schematische Darstellungen eines mobilen Kommunikations-Endgeräts mit einer Eingabevorrichtung gemäß einem ersten Ausführungsbeisipiel;
Figur 4 eine schematische Darstellung eines mobilen Kommunikations-Endgerätes mit einer Eingabevorrichtung gemäß einem zweiten Ausführungsbeispiel; und
Figur 5a bis 5c schematische Teildarstellungen eines mobilen Kommunikations-Endgerätes mit einer Eingabevorrichtung gemäß einem dritten Ausführungsbeispiel.

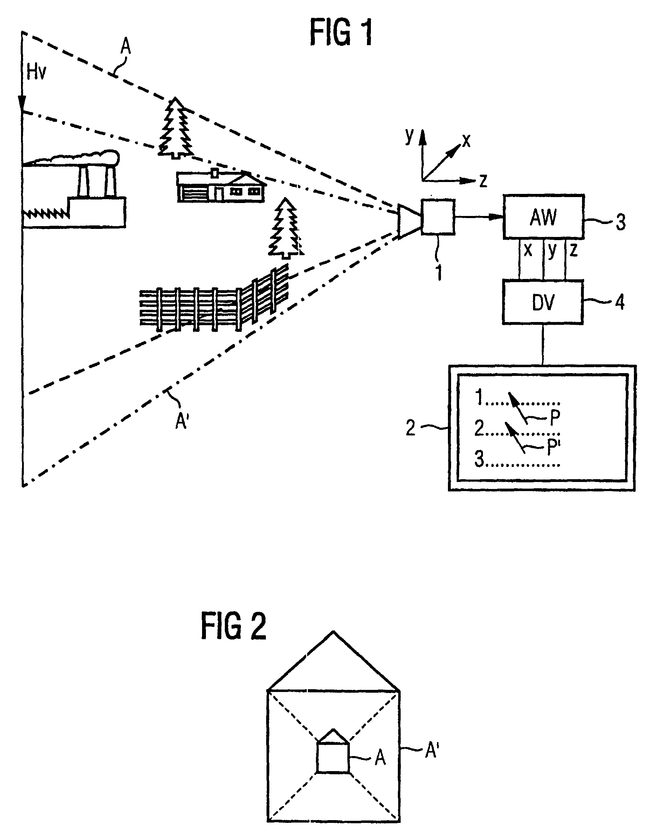

Figur 1 zeigt eine schematische Darstellung einer erfindungsgemäßen Eingabevorrichtung. In Figur 1 bezeichnet das Bezugszeichen 1 eine Aufnahmeeinheit zum seriellen Aufnehmen von Bildinformationen, wobei eine erste Bildinformation A im wesentlichen eine Landschaft mit einem Haus, zwei Bäumen und einem Industriegebäude darstellt. Nach Verschwenken der Aufnahmeeinheit 1 in negativer y-Richtung werden zweite Bildinformationen A' aufgenommen, die im wesentlichen aus dem Haus, dem Baum und dem Industriegebäude der ersten Bildinformationen A und einem zusätzlichen Zaun besteht. Der in den ersten Bildinformationen A vorhandene weitere Baum fehlt aufgrund des Schwenks der Aufnahmeeinheit 1 in den zweiten Bildinformationen A'.

Eine Bildauswerteeinheit 3 (AW) dient zur Auswertung der seriell aufgenommenen ersten und zweiten Bildinformationen A und A', wobei Steuerinformationen x, y und z ermittelt werden. Die Auswertung der Bildauswerteeinheit 3 beruht hierbei im Wesentlichen auf dem Ermitteln einer relativen Verschiebung zwischen den seriell aufgenommenen Bildinformationen, d.h. zwischen den ersten Bildinformationen A und den zweiten Bildinformationen A'. Genauer gesagt wird ein Haupt-Verschiebevektor HV ermittelt, der einer Verschiebung der wesentlichen Bildbestandteile innerhalb der Bildinformationen A und A' entspricht.

Bei dem in Figur 1 dargestellten Schwenk der Aufnahmeeinheit 1 in y-Richtung werden demzufolge bei einer Auswertung der Bildinformationen A und A' in der Auswerteeinheit 3 der Haupt-Verschiebevektor HV ermittelt, der im wesentlichen eine Verschiebung in y-Richtung darstellt. Die so gewonnene Steuerinformation in y-Richtung wird anschließend in einer Datenverarbeitungseinheit 4 (DV) derart verarbeitet, daß eine an der Datenverarbeitungseinheit 4 angeschlossene Anzeigeeinheit 2 eine entsprechende Verschiebung einer in der Anzeigeeinheit 2 dargestellten Auswahlinformation P nach P' bewirkt. In Figur 1 ist die in der Anzeigeeinheit 2 dargestellte Auswahlinformation ein Zeigersymbol P, das sich bei einer ersten Kamerastellung zum Aufnehmen der ersten Bildinformationen A in einer oberen Position befindet und mit dem Verschwenken der Aufnahmeeinheit 1 zum Aufnehmen der zweiten Bildinformationen A' in eine untere Position (P') wandert.

Demzufolge kann gemäß Figur 1 durch Verschwenken einer Aufnahmeeinheit 1 eine relative Verschiebung von seriell aufgenommenen Bildinformationen hervorgerufen und ausgewertet werden, die in der Anzeigeeinheit 2 eine Verschiebung der dargestellten Zeigersymbole P nach P' hervorruft.

Die relative Verschiebung wird hierbei anhand der wesentlichen Strukturen der Bildinformationen A und A' ermittelt. Genauer gesagt wird die relative Verschiebung nicht anhand von Mikroverschiebungen sondern anhand von Makroverschiebungen in den Bildinformationen A und A' ermittelt. Unter Makroverschiebungen versteht man beispielsweise Verschiebungen des allgemeinen Hintergrunds der Bildinformationen A und A', während Mikroverschiebungen Verschiebungen von begrenzten Bildbereichen aufgrund von aktuellen und schnellen Bewegungen sind. Demzufolge würde ein durch die in Figur 1 dargestellte Landschaft fahrendes Auto keine Makroverschiebung, sondern lediglich eine von der Eingabevorrichtung unberücksichtigte Mikroverschiebung von Bildinformationen hervorrufen.

Erfindungsgemäß werden für die Eingabe von Steuerinformationen bzw. die Steuerung von an der Anzeigeeinheit 2 dargestellten Auswahlinformationen P und P' lediglich Makroverschiebungen der aufgenommenen Bildinformationen berücksichtigt, wobei ein nicht dargestellter Schwellwertentscheider eine absolute Größe für die Makroverschiebung einstellt. Demzufolge wird von der Auswerteeinheit 3 beispielsweise eine Makroverschiebung berücksichtigt, wenn mindestens 90% der von der Aufnahmeeinheit 1 aufgenommenen Bildinformationen die gleiche oder eine ähnliche Verschiebung aufweisen. Unter gleicher Verschiebung versteht man hierbei eine parallel Verschiebung in im wesentlichen gleicher x- und y-Richtung, während eine ähnliche Verschiebung eine Verschiebung in z-Richtung bedeutet.

Figur 2 zeigt eine schematische Darstellung zur Veranschaulichung einer relativen Verschiebung von Bildinformationen in einer z-Richtung. Gemäß Figur 2 bestehen die von der Aufnahmeeinheit 1 aufgenommenen Bildinformationen aus einem Haus, das sich zunächst weit weg befindet (Bildinformationen A) und dem gleichen Haus, das durch Annäherung in z-Richtung vergrößert durch die Bildinformationen A' dargestellt ist. Bei einer Verschiebung in z-Richtung sind demzufolge die Verschiebevektoren nicht parallel zueinander in x- oder y-Richtung geordnet, sondern zeigen eine konzentrische Verschieberichtung. Derartige konzentrisch ausgerichtete Verschiebevektoren können daher von der Auswerteeinheit 3 als Steuerinformationen in z-Richtung ausgewertet werden, wodurch sogar eine dreidimensionale Steuerung der in der Anzeigeeinheit 2 dargestellten Auswahlinformationen, d. h. Zeigersymbole P und P' ermöglicht ist. Die Anzeigeeinheit 2 kann hierbei auch eine dreidimensionale Anzeigeeinheit darstellen (z. B. holographische Anzeigeeinheit).

Alternativ zur Bewegung der Aufnahmeeinheit 1 in z-Richtung, d.h. Annäherung an das aufzunehmende Objekt, kann die Aufnahmeeinheit 1 auch eine nicht dargestellte (elektronische oder mechanische) Zoom-Funktionseinheit aufweisen, mit der in gleicher Weise eine konzentrische Verschiebung der Bildinformationen durchgeführt werden kann. Ebenso kann die Aufnahmeeinheit 1 eine nicht dargestellte Dreh- oder Schwenkeinheit aufweisen, mit der die Makro-Verschiebungen in x- und y-Richtung realisiert werden können.

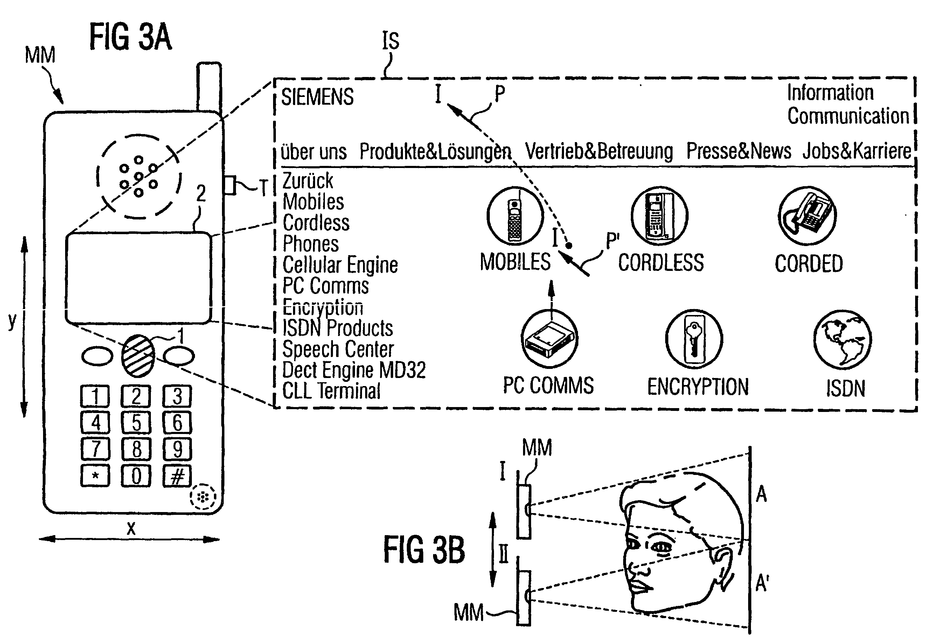

Figuren 3a und 3b zeigen schematische Darstellungen eines mobilen Multimedia-Kommunikationsendgeräts mit der erfindungsgemäßen Eingabevorrichtung gemäß einem ersten Ausführungsbeispiel. In Figur 3a bezeichnet MM ein mobiles Multimedia-Kommunikationsendgerät, wie es beispielsweise in Form eines mobilen Bildtelefons mit Internet-Zugang realisiert sein kann. Das mobile Multimedia-Kommunikationsendgerät MM besitzt neben den üblichen Funktionseinheiten im wesentlichen eine Aufnahmeeinheit 1, eine Anzeigeeinheit 2 sowie eine Aktivierungstaste T zum Aktivieren/I)eaktivieren der Eingabevorrichtung. Bei einem Internet-Zugriff wird in der Anzeigeeinheit 2 beispielsweise die vergrößert dargestellte Internet-Seite IS (web-page) dargestellt, wobei ein Zeigersymbol P an der Position I als Auswahlinformation dargestellt wird. Zum Bewegen des Zeigersymbols P von der Position I zur Position II kann gemäß Figur 3b ein Benutzer beispielsweise das mobile Multimedia-Kommunikationsendgerät MM vor seinem Gesicht nach unten bewegen, wodurch anstelle der Bildinformationen A in der Position I nunmehr die Bildinformationen A' in der Position II an der Aufnahmeeinheit 1 aufgenommen werden. Die dadurch entstehenden Makro-Verschiebungen werden, wie vorstehend beschrieben wurde, von der Auswerteeinheit 3 erfaßt und von der Datenverarbeitungseinheit 4 derart verarbeitet, daß die Anzeigeeinheit 2 den Zeiger P' nunmehr an der Position II der dargestellten Internet-Seite IS darstellt. Auf diese Weise erhält man durch eine Verschiebung der Aufnahmeeinheit 1 relativ zum aufgenommenen Hintergrund eine Verschiebung des die Auswahlinformation darstellenden Zeigersymbols P nach P'.

Wie bereits vorstehend beschrieben wurde, kann anstelle der vertikalen Verschiebung des mobilen Multimedia-Kommunikationsendgeräts von einer Position I zu einer Position II auch eine Verschwenkung durchgeführt werden, wodurch sich das Zeigersymbol P in gleicher Weise zur Position II für das Zeigersymbol P' verschieben läßt.

Mobile Multimedia-Kommunikationsendgeräte, wie sie beispielsweise in Figuren 3a und 3b dargestellt sind, besitzen insbesondere dann einen Vorteil, wenn sie als mobile Bildtelefone ausgestattet sind. Mobile Bildtelefone besitzen ohnehin eine großflächige Anzeigeeinheit 2 sowie eine Aufnahmeeinheit 1 zum Aufnehmen von Bildinformationen. Ferner besitzen derartige mobile Bildtelefone bereits als Bildauswerteeinheit 3 eine Bildkompressionseinrichtung zum Komprimieren der aufgenommenen Bildinformationen. Die bei der Bildkompression verwendeten Algorithmen erkennen hierbei eine Bewegung in den Bildinformationen A und A', wobei die Bewegung der Gesamt-Bildinformation derart berechnet wird, daß sich ein Gesamt-bzw. Haupt-Bewegungsvektor ergibt, der gleichbedeutend mit der Bewegung bzw. Verschiebung des mobilen Multimedia-Kommunikationsendgeräts MM bzw. der dazugehörigen Bildinformationen A und A' ist. Dieser bei der Bildkompression leicht zu ermittelnde Gesamt-bzw. Haupt-Bewegungsvektor kann nunmehr als Steuerinformation mit entsprechender x-, y- und z-Komponente verarbeitet werden und die Auswahlinformation, d. h. die Zeigersymbole P bzw. P' entsprechend verschieben. Da die verwendeten Kompressions-Algorithmen im wesentlichen in einem mobilen Bildtelefon bereits vorhanden sind, entstehen somit keine Mehrkosten. Zum Umschalten bzw. Aktivieren/Deaktivieren der Eingabevorrichtung benötigt das mobile Bildtelefon bzw. mobile Multimedia-Kommunikationsendgerät MM lediglich eine Aktivierungstaste T.

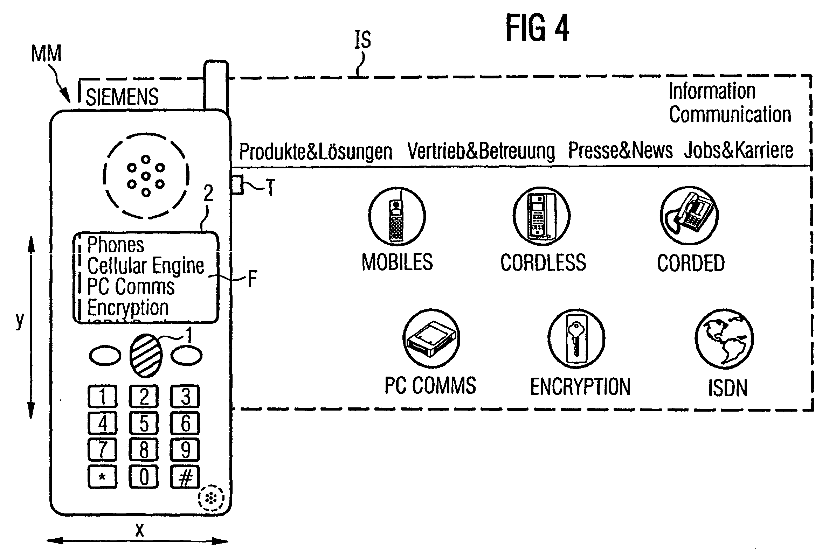

Figur 4 zeigt eine schematische Darstellung eines mobilen Multimedia-Kommunikationsendgeräts mit einer Eingabevorrichtung gemäß einem zweiten Ausführungsbeispiel. Gleiche Bezugszeichen bezeichnen in Figur 4 gleiche oder entsprechende Komponenten wie in Figuren 3a und 3b, weshalb auf eine detailierte Beschreibung nachfolgend verzichtet wird.

Beim mobilen Multimedia-Kommunikationsendgerät MM mit einer Eingabevorrichtung gemäß dem zweiten Ausführungsbeispiel stellt die Anzeigeeinheit 2 nicht die vollständige Internet-Seite IS dar, sondern lediglich einen selektiven Ausschnitt F. Diese Art der Darstellung von Informationen beispielsweise aus dem Internet oder einer sonstigen Anwendung besitzt den Vorteil, daß die Informationen der dargestellten Seite IS für den Benutzer eine verbesserte Lesbarkeit aufweisen.

Gemäß der vorliegenden Erfindung besitzt die Eingabevorrichtung nunmehr eine intuitive Steuerung der darzustellenden Informationsseite IS. Genauer gesagt muß ein Benutzer das mobile Multimedia-Kommunikationsendgerät mit der Aufnahmeeinheit 1 lediglich in x- und y-Richtung verschieben, um zu den jeweiligen Bereichen der Informationsseite IS zu gelangen, wodurch ohne weitere Verwendung von Tasten oder Eingabemedien die Informationsseite IS intuitiv (d.h. Verschieben eines Sichtfensters) ausgelesen werden kann.

Darüberhinaus kann eine Verschiebung in z-Richtung, d.h. eine Vorwärts-/Rückwärtsbewegung des mobilen Multimedia-Kommunikationsendgeräts MM, eine Vergrößerung/Verkleinerung des selektive Ausschnitts F bewirken, die eine intuitive Benutzung vergleichbar mit einer Lupe ermöglicht.

Gemäß Figuren 3 und 4 befindet sich die Aufnahmeeinheit 1 an der Vorderseite des mobilen Multimedia-Kommunikationsendgeräts MM. Es kann sich jedoch auch an der Rückseite des Geräts befinden bzw. eine zweite Aufnahmeeinheit an der Rückseite des mobilen Multimedia-Kommunikationsendgeräts MM angeordnet sein. Bei geeigneter Ausführung der Optik, d. h. ein Scharfstellen der Aufnahmeeinheit 1 ist auch auf sehr kurze Entfernung möglich, kann das mobile Multimedia-Kommunikationsendgerät MM mit der Rückseit:e auf eine geeignete strukturierte Unterlage gelegt werden und als Ganzes wie eine Maus verschoben werden. Die an der Rückseite befindliche Aufnahmeeinheit erkennt hierbei, wie vorstehend beschrieben wurde, die relative Bewegung bzw. relative Verschiebung der aufgenommenen Bildinformationen (strukturierte Unterlage) und ermittelt daraus die entsprechenden Steuerinformationen zum Ansteuern der Auswahlinformationen, d. h. einem Zeigersymbol P oder einem Anzeigebereich F der Informationsseite IS. Auf diese Weise ergibt sich eine besonders einfache Bedienbarkeit für die Eingabevorrichtung, da sie im wesentlichen mit einer herkömmlichen Maus-Eingabevorrichtung übereinstimmt. Vorzugsweise besitzt in diesem Fall das mobile Multimedia-Kommunikationsendgerät die von herkömmlichen Maus-Eingabevorrichtungen bekannten (nicht dargestellten) Auswahltasten.

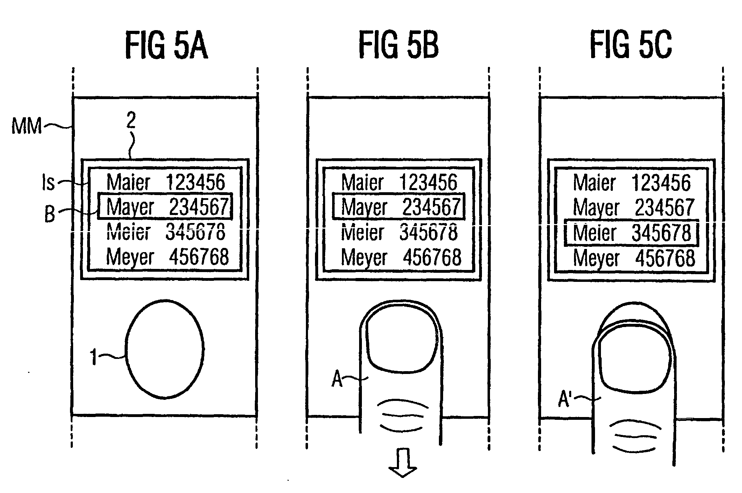

Figuren 5a bis 5c zeigen vergrößerte Teilansichten eines mobilen Multimedia-Kommunikationsendgeräts MM mit einer Eingabevorrichtung gemäß einem dritten Ausführungsbeispiel. In den Figuren 5a bis 5c bezeichnen gleiche Bezugszeichen gleiche Komponenten wie in den Figuren 1 bis 4, weshalb auf eine detaillierte Beschreibung nachfolgend verzichtet wird.

Gemäß Figuren 5a bis 5c kann die Eingabevorrichtung gemäß dem dritten Ausführungsbeispiel in gleicher Weise wie eine sogenannte herkömmliche "touch--pad"-Eingabevorrichtung verwendet werden. In Figur 5a bezeichnet das Bezugszeichen 1 wiederum eine Aufnahmeeinheit 1, die jedoch ein spezielles Makro-Kamerasystem darstellt. Genauer gesagt besitzt die Aufnahmeeinheit 1 gemäß Figuren 5a bis 5c die Möglichkeit, sehr feine Strukturen in unmittelbarer Nähe der Kamera aufzunehmen, wodurch beispielsweise die Fingerlinien eines auf die Aufnahmeeinheit unmittelbar aufgelegten Fingers scharf aufgenommen werden.

Die Anzeigeeinheit 2 zeigt gemäß Figuren 5a bis 5c eine Telefonbuchliste mit einer Vielzahl von Namen und dazugehörigen Telefonnummern. Die in der Anzeigeeinheit 2 dargestellte Telefonbuchliste entspricht somit einer Informationsseite IS, wobei die Auswahlinformation weder einen Zeigersymbol P zum Angeben einer Auswahlposition noch eine Anzeigefläche F, sondern ein vorbestimmtes Auswahlfeld B in Form eines beispielsweise farblich markierten Balkens darstellt. Zur Steuerung der Eingabe bzw. zur Auswahl des Namens Meier mit der Telefonnummer 345678 legt nunmehr ein Benutzer seinen Finger auf die Aufnahmeeinheit 1, wobei die Eingabevorrichtung über die nicht dargestellte Aktivierungstaste T aktiviert ist. Gemäß Figur 5b werden nunmehr die Fingerlinien als Bildinformation A aufgenommen, wobei der Benutzer zur Verschiebung des Balkens B seinen Finger nach unten bewegt. Die Figur 5c zeigt hierbei eine Teilansicht des mobilen Multimedia-Kommunikationsendgeräts MM, wobei der Finger in einer unteren Position dargestellt ist. Die Aufnahmeeinheit 1 hat demzufolge eine Verschiebung der aufgenommenen Bildinformationen A → A' auf der Grundlage der Fingerlinien erkannt und als vertikale Verschiebung nach unten ausgewertet. Demzufolge wird eine entsprechende Steuerinformation von der Auswerteeinheit 3 an die Datenverarbeitungseinheit 4 ausgegeben, wodurch der Balken B in der Anzeigeeinheit 2 nach unten verschoben wird und nunmehr den gewünschten Namen Meier mit der Telefonnummer 345678 unterlegt.

Zum Auswählen des gewünschten Namens kann die Eingabevorrichtung gemäß dem dritten Ausführungsbeispiel ferner einen Drucksensor zum Bestätigen der angezeigten Auswahlinformation, d.h. des durch den Balken B unterlegten Namens aufweisen, wodurch weitere Festtasten oder sogenannte menügesteuerte "soft keys" eingespart werden.

Bei entsprechender Dimensionierung der Aufnahmeeinheit 1 und der Auswerteeinheit 3 kann auf diese Weise auch eine Eingabe erfolgen, wie sie beispielsweise von herkömmlichen "touch-pads" und/oder "touch-screens" bekannt ist. Durch die Integration eines Druck-Sensors in die Aufnahmeeinheit 1 wird der Platzbedarf für die Eingabevorrichtung weiter verringert und der Bedienkomfort verbessert. Insbesondere gegenüber den herkömmlichen "touch-pads" wird bei der Eingabevorrichtung gemäß dem dritten Ausführungsbeispiel nicht ein Schwerpunkt einer Auflagefläche ermittelt, sondern die genaue Position bzw. Bewegung des Fingers anhand seiner Linienzeichnung verfolgt. Daher ist die Genauigkeit dieser Eingabevorrichtung wesentlich größer als bei den herkömmlichen Eingabevorrichtungen. Im wesentlichen wird somit auch bei der Eingabevorrichtung gemäß dem dritten Ausführungsbeispiel eine relative Makro-Verschiebung der aufgenommenen Bildinformationen zur Steuerung von Auswahlinformationen verwendet.

Vorzugsweise wird als Aufnahmeeinheit 1 eine CCD- oder CMOS-Sensorkamera verwendet. Die Aufnahmeeinheit 1 befindet sich hierbei entweder an der Vorderseite oder an der Rückseite eines jeweiligen Eingabe- bzw. Computersystems, sie ist jedoch nicht darauf beschränkt und kann ebenso an einer anderen Position angeordnet sein und beispielsweise über Spiegel in eine der Anzeigerichtung der Anzeigeeinheit 2 gleiche oder entgegengesetzte Richtung umgelenkt werden.

Die Erfindung wurde vorstehend anhand eines mobilen Multimedia-Kommunikationsendgeräts beschrieben. Sie ist jedoch nicht darauf beschränkt und umfaßt in gleicher Weise Kleinst-Computersysteme ohne Kommunikationsanbindung, wie z. B. sogenannte Palm-Geräte. In gleicher Weise kann die vorliegende Erfindung auch auf schnurgebundene Telekommunikations-Endgeräte und sonstige Computersysteme angewendet werden.

## Patentansprüche

1. Eingabevorrichtung für Computer Systeme mit
einer Aufnahmeeinheit (1) zum seriellen Aufnehmen von Bildinformationen (A, A');
einer Bildauswerteeinheit (3) zum Auswerten der aufgenommenen Bildinformationen (A, A') und Ermitteln von Steuerinformationen (x, y, z);
einer Datenverarbeitungseinheit (4) zum Verarbeiten der Steuerinformationen (x, y, z) in Auswahlinformationen(P; B; F); und
einer Anzeigeeinheit (2) zum Anzeigen der Auswahlinformationen (P; B; F), wobei
die Bildauswerteeinheit (3) die Steuerinformationen (x, y, z) aus einer relativen Verschiebung der seriell aufgenommenen Bildinformationen (A, A') ermittelt,
**dadurch gekennzeichnet, daß**
die Bildauswerteeinheit (3) eine Bildkompressionseinrichtung zum Erzeugen von Bewegungsvektoren aufweist, wobei die Steuerinformationen einen Haupt-Bewegungsvektor (x, y, z) der seriell aufgenommenen Bildinformationen (A, A') darstellen.

2. Eingabevorrichtung nach Patentanspruch 1,
**dadurch gekennzeichnet, daß** die Auswahlinformation in einem angezeigten Bild (IS) eine Auswahlposition (P), ein Auswahlfeld (B) und/oder eine gesamte Anzeigefläche (F) der Anzeigeeinheit (2) darstellt.

3. Eingabevorrichtung nach Patentanspruch 1 oder 2,
**dadurch gekennzeichnet, daß** die Steuerinformationen eine x-Komponente aufweisen, wobei die Bildauswerteeinheit (3) im wesentlichen eine parallele relative Verschiebung der Bildinformationen (A, A') in x-Richtung berücksichtigt.

4. Eingabevorrichtung nach einem der Patentansprüche 1 bis 3, **dadurch gekennzeichnet, daß** die Steuerinformationen eine y-Kornponente aufweisen, wobei die Bildauswerteeinheit (3) im wesentlichen eine parallele relative Verschiebung der Bildinformationen (A, A') in y-Richtung berücksichtigt.

5. Eingabevorrichtung nach einem der Patentansprüche 1 bis 4, **dadurch gekennzeichnet, daß** die Steuerinformationen eine z-Komponente aufweisen, wobei die Bildauswerteeinheit (3) im wesentlichen eine konzentrische relative Verschiebung der Bildinformationen (A, A') in x- und y-Richtung berücksichtigt.

6. Eingabevorrichtung nach Patentanspruch 5, **dadurch gekennzeichnet, daß** die Aufnahmeeinheit (1) eine Verschiebevorrichtung zum Erzeugen der parallelen und/oder konzentrischen relativen Verschiebung aufweist.

7. Eingabevorrichtung nach Patentanspruch 5 oder 6,
**dadurch gekennzeichnet, daß** die Anzeigeeinheit (2) die Auswahlinformation (F) in Abhängigkeit von der z-Komponente der Steuerinformation vergrößert oder verkleinert.

8. Eingabevorrichtung nach einem der Patentansprüche 1 bis 7, **dadurch gekennzeichnet, daß** das Computersystem ein mobiles Multimedia-Kommunikationsendgerät (MM) darstellt.

9. Eingabevorrichtung nach Patentanspruch 8,
**dadurch gekennzeichnet, daß** die Aufnahmeeinheit (1) in Anzeigerichtung der Anzeigeeinheit (2) aufnimmt.

10. Eingabevorrichtung nach einem der Patentansprüche 8 oder 9, **dadurch gekennzeichnet, daß** die Aufnahmeeinheit (1) entgegen der Anzeigerichtung der Anzeigeeinheit (2) aufnimmt.

11. Eingabevorrichtung nach Patentanspruch 8 oder 9, **gekennzeichnet durch** zumindest eine weitere Aufnahmeeinheit, die entgegen der Anzeigerichtung der Anzeigeeinheit (2) aufnimmt.

12. Eingabevorrichtung nach einem der Patentansprüche 1 bis 11, **dadurch gekennzeichnet, daß** die Aufnahmeeinheit eine CCD- oder CMOS-Sensorkamera aufweist.

13. Eingabevorrichtung nach einem der Patentansprüche 1 bis 12, **gekennzeichnet durch** zumindest eine Aktiviexungsvorrichtung (T) zum Aktivieren/Deaktivieren der Eingabevorrichtung.

14. Eingabevorrichtung nach einem der Patentansprüche 1 bis 13, **dadurch gekennzeichnet, daß** die Aufnahmeeinheit (1) ein Makro-Kamerasystem darstellt, mit dem die Bildinformationen (A, A') aus sehr kurzer Entfernung scharf aufgenommen werden.

15. Eingabevorrichtung nach einem der Patentansprüche 1 bis 14, **dadurch gekennzeichnet, daß** die Aufnahmeeinheit (1) einen Drucksensor zum Bestätigen der angezeigten Auswahlinformation (P, B, F) aufweist.

16. Eingabevorrichtung nach einem der Patentansprüche 1 bis 15, **dadurch gekennzeichnet, daß** das Computersystem ein mobiles Bildtelefon darstellt.

17. Verfahren zur Eingabe von Steuerinformationen in ein Computersystem bestehend aus den Schritten:
a) Aufnehmen von ersten Bildinformationen (A);
b) Aufnehmen von zweiten Bildinformationen (A');
c) Ermitteln einer relativen Verschiebung zwischen den ersten und zweiten Bildinformationen; und
d) Erzeugen der Steuerinformationen (x, y, z) auf der Grundlage der ermittelten relativen Verschiebung
**dadurch gekennzeichnet, daß**
das Ermitteln in Schritt c) ein Ermitteln von Bewegungsvektoren mittels eines Bild-Kompressionsverfahrens darstellt; und das Erzeugen gemäß Schritt d) ein Erzeugen von Steuerinformationen (x, y, z) auf der Grundlage eines Haupt-Bewegungsvektors darstellt.

## Claims

1. Input device for computer systems having a recording unit (1) for serially recording image information (A, A');
an image evaluation unit (3) for evaluating the recorded image information (A, A') and determining control information (x, y, z);
a data processing unit: (4) for processing the control information (x, y, z) in selection information (P; B; F); and
a display unit (2) for displaying the selection information (P; B; F), in which
the image evaluation unit (3) determines the control information (x, y, z) from a relative displacement of the serially recorded image information (A, A'),
**characterized in that** the image evaluation unit (3) has an image compression device for generating motion vectors, wherein the control information is a main motion vector (x, y, z) of the serially recorded image information (A, A').

2. Input device according to Claim 1, **characterized in that** the selection information in a displayed image (IS) is a selection position (P), a selection field (B) and/or an entire display area (F) of the display unit (2).

3. Input device according to Claim 1 or 2, **characterized in that** the control information has an x component, wherein the image evaluation unit (3) essentially takes into account a parallel relative displacement of the image information (A, A') in the x direction.

4. Input device according to one of Claims 1 to 3, **characterized in that** the control information has a y component, wherein the image evaluation unit (3) essentially takes into account a parallel relative displacement of the image information (A, A') in the y direction.

5. Input device according to one of Claims 1 to 4, **characterized in that** the control information has a z component, wherein the image evaluation unit (3) essentially takes into account a concentric relative displacement of the image information (A, A') in the x and y directions.

6. Input device according to Claim 5, **characterized in that**: the recording unit (1) has a displacement device for creating the parallel and/or concentric relative displacement.

7. Input device according to Claim 5 or 6, **characterized in that** the display unit (2) enlarges or reduces the selection information (F) depending on the z component of the control information.

8. Input device according to one of Claims 1 to 7, **characterized in that** the computer system is a mobile multimedia communication terminal (MM).

9. Input device accordign to Claim 8, **characterized in that** the recording unit (1) records in the display direction of the display unit (2).

10. Input device according to one of Claims 8 or 9, **characterized in that** the recording unit (1) records in the opposite direction to the display direction of the display unit (2).

11. Input device according to Claim 8 or 9, **characterized by** at least one further recording unit which records in the opposite direction to the display direction of the display unit (2).

12. Input device according to one of Claims 1 to 11, **characterized in that** the recording unit has a CCD or CMOS sensor camera.

13. Input device according to one of Claims 1 to 12, **characterized by** at least one activation element (T) for activating/deactivating the input device.

14. Input device according to one of Claims 1 to 13, **characterized in that** the recording unit (1) is a macro camera system which can record the image information (A, A') in sharp focus from a very short distance.

15. Input device according to one of Claims 1 to 14, **characterized in that** the recording unit (1) has a pressure sensor for confirming the displayed selection information (P, B, F).

16. Input device according to one of Claims 1 to 15, **characterized in that** the computer system is a mobile videophone.

17. Method for inputting control information in a computer system comprising the steps:
a) recording first image information (A);
b) recording second image information (A');
c) determining a relative displacement between the first and second image information; and
d) generating the control information (x, y, z) on the basis of the relative displacement determined,
**characterized in that** the determination in step c) is a determination of motion vectors by means of an image compression method; and the generation according to step d) is a generation of control information (x, y, z) on the basis of a main motion vector.

## Revendications

1. Dispositif d'entrée pour systèmes informatiques, comprenant
une unité de saisie (1) pour la saisie en série d'informations de type image (A, A'),
une unité d'analyse d'images (3) pour analyser les informations de type image (A, A') qui ont été saisies et établir des informations de commande (x, y, z),
une unité de traitement de données (4) pour transformer en informations de sélection (P, B, F) les informations de commande (x, y, z),
une unité d'affichage (2) pour afficher les informations de sélection (P, B, F),
l'unité d'analyse d'images (3) établissant les informations de commande (x, y, z) au départ d'un déplacement relatif des informations de type image (A, A') qui ont été saisies en série,
**caractérisé en ce que** l'unité d'analyse d'images(3) comprend une unité de compression d'images pour générer des vecteurs de mouvement, les informations de commande représentant un vecteur principal de mouvement (x, y, z) des informations de type image (A, A') qui ont été saisies en série.

2. Dispositif d'entrée selon la revendication 1, **caractérisé en ce que** l'information de sélection représente, dans une image affichée (IS), une position de sélection (P), un champ de sélection (B) et/ou toute une surface d'affichage (F) de l'unité d'affichage (2).

3. Dispositif d'entrée selon la revendication 1 ou 2, **caractérisé en ce que** les informations de commande présentent une composante x, l'unité d'analyse d'images (3) tenant compte, pour l'essentiel, d'un déplacement parallèle relatif des informations de type image (A, A') dans la direction x.

4. Dispositif d'entrée selon l'une des revendications 1 à 3, **caractérisé en ce que** les informations de commande présentent une composante y, l'unité d'analyse d'images (3) tenant compte, pour l'essentiel, d'un déplacement parallèle relatif des informations de type image (A, A') dans la direction y.

5. Dispositif d'entrée selon l'une des revendications 1 à 4, **caractérisé en ce que** les informations de commande présentent une composante z, l'unité d'analyse d'images (3) tenant compte, pour l'essentiel, d'un déplacement concentrique relatif des informations de type image (A, A') dans la direction x et dans la direction y.

6. Dispositif d'entrée selon la revendication 5, **caractérisé en ce que** l'unité de saisie (1) comprend un dispositif de déplacement pour générer le déplacement parallèle et/ou concentrique relatif.

7. Dispositif d'entrée selon la revendication 5 ou 6, **caractérisé en ce que** l'unité d'affichage (2) agrandit ou rapetisse l'information de sélection (F) en fonction de la composante z de l'information de commande.

8. Dispositif d'entrée selon l'une des revendications 1 à 7, **caractérisé en ce que** le système informatique est un terminal multimédia de communication mobile (MM).

9. Dispositif d'entrée selon la revendication 8, **caractérisé en ce que** la saisie par l'unité de saisie (1) se fait dans le sens d'affichage de l'unité d'affichage (2).

10. Dispositif d'entrée selon l'une des revendications 8 ou 9, **caractérisé en ce que** la saisie par l'unité de saisie (1) se fait dans le sens inverse du sens d'affichage de l'unité d'affichage (2).

11. Dispositif d'entrée selon l'une des revendications 8 ou 9, **caractérisé par** au moins une unité de saisie supplémentaire, la saisie par cette dernière se faisant dans le sens inverse du sens d'affichage de l'unité d'affichage (2).

12. Dispositif d'entrée selon l'une des revendications 1 à 11, **caractérisé en ce que** l'unité de saisie comprend une caméra avec capteur CCD ou CMOS.

13. Dispositif d'entrée selon l'une des revendications 1 à 12, **caractérisé par** au moins un dispositif d'activation (T) pour activer / désactiver le dispositif d'entrée.

14. Dispositif d'entrée selon l'une des revendications 1 à 13, **caractérisé en ce que** l'unité de saisie (1) est un système de caméra macro permettant une prise de vue nette des informations de type image (A, A') à très faible distance.

15. Dispositif selon l'une des revendications 1 à 14, **caractérisé en ce que** l'unité de saisie (1) présente un capteur de pression pour confirmer l'information de sélection (P, B, F) affichée.

16. Dispositif d'entrée selon l'une des revendications 1 à 15, **caractérisé en ce que** le système informatique est un visiophone mobile.

17. Procédé d'entrée d'informations de commande dans un système informatique, comprenant les étapes suivantes :
a) saisie des premières informations de type image (A);
b) saisie des deuxièmes informations de type image (A');
c) détermination d'un déplacement relatif entre les premières et les deuxièmes informations de type image;
d) génération des informations de commande (x, y, z) sur base du déplacement relatif qui a été déterminé,
**caractérisé en ce que** la détermination prévue à l'étape c) consiste à déterminer des vecteurs de mouvement au moyen d'un procédé de compression d'images et **en ce que** la génération prévue à l'étape d) consiste à générer des informations de commande (x, y, z) sur base d'un vecteur principal de mouvement.
